# EUROPÄISCHE PATENTSCHRIFT

(11) **EP 1 185 902 B1**
(45) Veröffentlichungstag und Bekanntmachung des Hinweises auf die Patenterteilung: **22.12.2004**
(21) Anmeldenummer: 01919154.3
(22) Anmeldetag: 28.02.2001
(51) Int. Cl.: G03B 27/32, H04N 1/00

(54) **VERFAHREN UND VORRICHTUNG ZUM AUTOMATISCHEN EINZUG VON AUF EINEM SICHTGERÄT ANZUZEIGENDEN UND/ODER IN EINEM DIGITALISIERUNGSGERÄT ABZULICHTENDEN DOKUMENTENVORLAGEN**
METHOD AND DEVICE FOR AUTOMATICALLY INSERTING DOCUMENTS FOR DISPLAYING ON A DISPLAY DEVICE AND/OR COPYING IN A DIGITISING DEVICE
PROCEDE ET DISPOSITIF DESTINE A L'INTRODUCTION AUTOMATIQUE DE DOCUMENTS A AFFICHER SUR UNE UNITE DE VISUALISATION ET/OU A PHOTOGRAPHIER DANS UN APPAREIL DE NUMERISATION

(30) Priorität: 11.04.2000 DE 10017989; 07.11.2000 DE 10055159
(43) Veröffentlichungstag der Anmeldung: 13.03.2002
(73) Patentinhaber: DRS Digitale Repro-Systeme GmbH, 47047 Duisburg (DE)
(72) Erfinder: SCHREIER, Susanne, 26131 Oldenburg (DE); BLANKE, Jürgen, 27751 Delmenhorst (DE)
(74) Vertreter: Röther, Peter, Dipl.-Phys.
(86) Internationale Anmeldenummer: PCT/DE2001/000782
(87) Internationale Veröffentlichungsnummer: WO 2001/077750

(56) Entgegenhaltungen:
- EP-A- 0 887 181
- EP-A- 0 944 235
- WO-A-91/16662

## Beschreibung

Die Erfindung betrifft ein Verfahren zum automatischen Einzug von auf einem Sichtgerät anzuzeigenden und/oder in einem Digitalisierungsgerät abzulichtenden Dokumentenvorlagen wie Mikrofiches, Mikrofilm-Jackets oder ähnlichem, bei dem aus einem Aufnahmemagazin für einen Stapel abzuarbeitender Vorlagen jeweils eine Vorlage einem Vorlagenträger zugeführt wird und von dort einem Ablagemagazin für die abgearbeiteten Vorlagen gemäß dem Oberbegriff des Patentanspruchs 1 sowie eine Vorrichtung zur Durchführung des Verfahrens.

Bei der im Laufe der Jahre bei Firmen, Verwaltungen und Krankenhäusern angewachsenen Menge an Dokumenten, die zur bequemeren Handhabung und aus Platzgründen digitalisiert werden müssen, spielt der Zeitfaktor bei der Digitalisierung und Abspeicherung der Dokumente eine erhebliche Rolle.

Eine übliche Methode hierbei ist, die Vorlagen einzeln unter das Digitalisierungsgerät zu legen und nach dem Ablichten und Digitalisieren von Hand wieder zu entfernen.

Infolge der umständlichen Handhabung bei der Zuführung der Vorlagen ist beispielsweise bei der Abarbeitung von Mikrofilm-Jackets lediglich ein Durchsatz von 30 bis 60 Jackets pro Stunde erreichbar. Das heißt, daß in ca. 1- bis 2-minütigen Abständen ständig neue Jackets von Hand eingelegt werden müßten. Dies erfordert die ständige Anwesenheit einer Bedienperson während des Digitalisierungsbetriebes.

In der Patentanmeldung WO 00/22808 ist ein automatisiertes Verfahren und eine hierzu angepasste Vorrichtung beschrieben, mit Hilfe derer die Abarbeitungsgeschwindigkeit erheblich gesteigert werden kann. Die dort beschriebene Vorrichtung arbeitet mit rein mechanischen Mitteln, wodurch sie störungsanfällig und wartungsintensiv ist.

Die Patentanmeldung WO 91/16662 offenbart ein Verfahren bzw. eine Vorrichtung gemäß dem Oberbegriff des Anspruchs 1 bzw. des Anspruchs 10.

Der Erfindung liegt daher die Aufgabe zugrunde ein Verfahren und eine Vorrichtung der eingangs genannten Art zu so zu führen bzw. auszubilden, daß der konstruktive Aufwand gering bleibt, möglichst wenig bewegliche Teile vorhanden sind und trotzdem eine zuverlässige Arbeitsweise erreicht wird.

Die Erfindung löst diese Aufgabe gemäß dem kennzeichnenden Teil des Anspruchs 1 dadurch, daß von einem in dem Aufnahmemagazin liegenden Vorlagenstapel die oberste Vorlage nach oben auf etwa Vorlagenträgerniveau angesaugt und danach der Reststapel durch Ansaugen in entgegengesetzter Richtung im Magazin gehalten wird, die angesaugte Vorlage seitlich zum Vorlagenträger transportiert und durch Beenden der Saugwirkung auf diesem abgelegt wird, und nach Abarbeiten der Vorlage dieselbe wiederum angesaugt und zum Ablagemagazin transportiert wird.

Im folgenden wird eine mögliche Verfahrensführung dargestellt:
- Das Aufnahmemagazin ist gefüllt
- Auf dem Vorlagenträger befindet sich keine Vorlage
- Das Ablagemagazin ist geleert
- Die die Saugwirkung erzeugende Pumpe steht still
- Über dem gefüllten Magazin befindet sich das Ansaugelement, während über dem noch leeren Ablagemagazin das Ablageelement positioniert ist
- Die Saugvorrichtung wird gestartet
- Mindestens eine Vorlage wird hierdurch vom Stapel angesaugt
- Hierdurch steigt das Vakuum an und ein Grenzdruckventil wird geöffnet
- Gegebenenfalls an der Vorlage haftende Doppel werden entfernt und zurückgesaugt ins Magazin, der Reststapel wird gehalten
- Das Vakuum wird auf einen geringeren Wert heruntergeregelt
- Die angesaugte Vorlage wird seitlich zum Vorlagenträger verschoben
- Die Saugvorrichtung wird abgeschaltet (damit das Vakuum schnell zusammenbricht wird entweder ein By-pass-Ventil geöffnet, die Ausblasseite der Saugvorrichtung kurz verschlossen, oder der Antrieb der Saugvorrichtung elektrisch oder mechanisch abgebremst)
- Das Vakuum bricht zusammen, die Vorlage fällt auf den Vorlagenträger
- Die Vorlage wird digitalisiert
- Nach der Digitalisierung wird die Vorlage vom vorlagenträger ebenfalls durch Saugwirkung angehoben und zum Ablagemagazin transportiert.
- Gleichzeitig mit dem Abheben der digitalisierten Vorlage vom Vorlangenträger wird aus dem Aufnahmemagazin die nächste Vorlage angesaugt.

Gemäß einer bevorzugten Verfahrensführung, bei der auf das Grenzdruckventil und das zweite Transportmittel, welches die abgearbeitete Vorlage vom Vorlagenträger zum Ablagemagazin bringt, verzichtet wird, ergibt sich folgender Ablauf:
- Das Aufnahmemagazin ist gefüllt
- Auf dem Vorlagenträger befindet sich keine Vorlage
- Das Ablagemagazin ist geleert
- Über dem gefüllten Magazin befindet sich das ansaugende Transportmittel
- Die Saugvorrichtung im Transportmittel wird gestartet
- Mindestens eine Vorlage wird hierdurch vom Stapel angesaugt
- Die Ansaugöffnungen im Transportmittel werden geschlossen, wodurch entweder ein im Bereich dieser Ansaugöffnungen angeordneter Mikroschalter betätigt wird, welcher ein Signal zur Auflösung des Rücksaugeffektes erzeugt (ein derartiger Sensor kann aber auch an anderer Stelle sitzen).
- Die angesaugte Vorlage wird seitlich zum Vorlagenträger verschoben
- Die Saugvorrichtung im Transportmittel wird abgeschaltet
- Das Vakuum bricht zusammen, die Vorlage fällt auf den Vorlagenträger
- Das Transportmittel wird vom Vorlagenträger seitlich weg bewegt
- Die Vorlage wird digitalisiert
- Nach der Digitalisierung wird die Vorlage vom Vorlagenträger vom Transportmittel wieder aufgenommen und zum Ablagemagazin transportiert
- Nachdem das Transportmittel die abgearbeitete Vorlage in das Ablagemagazin abgeworfen hat, fährt es in die ursprüngliche Position über das Aufnahmemagazin und der Vorgang beginnt von neuem.

Bei dieser zweiten bevorzugten Verfahrensalternative wird eine Vorrichtung gemäß Anspruch 11 eingesetzt, die dadurch gekennzeichnet ist, daß die mit den Ansaugöffnungen versehene ebene Platte Teil eines auf Führungen verfahrbaren Gehäuses ist, welches mittels einer Zwischenwand in zwei Teilbereiche aufgeteilt ist, wobei einer der Teilbereiche oberhalb der Ansaugöffnungen angeordnet ist und mittels eines im zweiten Teilbereich angeordneten Sauggebläses evakuierbar ist, wobei der zweite Teilbereich eine Öffnung aufweist, die mit einer Öffnung im Aufnahmemagazin fluchtet, derart, daß die aus dem ersten Teilbereich angesaugte Luft in den doppelwandigen Bodenteil des Aufnahmemagazins gelangt.

Das heißt, solange keine Vorlage an der ebenen Platte haftet und die Ansaugöffnungen hier abdeckt, zirkuliert die vom Sauggebläse bewegte Luft durch die miteinander fluchtenden Öffnungen in den doppelwandigen Bodenbereich, von dort durch die Öffnungen in den Seitenwänden des Magazins durch die Ansaugöffnungen in der ebenen Platte zum Sauggebläse.

Haftet nun eine angesaugte Vorlage an dieser ebenen Platte, sind die Ansaugöffnungen verschlossen und der Luftstrom ist unterbrochen.

Nun wird ein zweites, im Bodenbereich des Aufnahmemagazins angeordnetes Sauggebläse in Tätigkeit gesetzt, wodurch der Innenhohlraum im Aufnahmemagazin evakuiert wird, so daß der im Behälter befindliche Reststapel zurückgehalten wird und tatsächlich nur eine einzige Vorlage an der ebenen Platte des Transportmittels anhaftet. Als Auslöser für das zweite Sauggebläse kann dabei - wie oben ausgeführt - in der ebenen Platte ein Mikroschalter vorgesehen sein, der durch die angesaugte Vorlage gedrückt wird.

Ein derartiger Mikroschalter hat weiterhin den Vorteil, daß durch seine Federkraft die Vorlage beim Ablegen auf den Vorlagenträger aktiv abgestoßen wird, wodurch die Wirkung der Schwerkraft unterstützt wird.

Eine zweite Möglichkeit zum Auslösen des zweiten Sauggebläses liegt darin, daß im Luftstrom des ersten Sauggebläses ein gegen die Kraft einer Feder auslenkbarer Mikroschalter vorgesehen ist, der in seine Schaltstellung zurückschwenkt, wenn durch Ansaugen einer Vorlage der Luftstrom unterbrochen wird.

Die angesaugte Vorlage wird auf einem Vorlagenträger abgelegt, der bevorzugterweise gemäß Anspruch 15 aus einem den Abmessungen der Vorlage entsprechenden Rahmen besteht, an dem eine die Vorlage abdeckende Glasplatte anlenkbar ist.

Die Glasplatte braucht nur bei Bedarf am Rahmen angeordnet zu werden, da sie bei der Digitalisierung von Mikrofiches nicht unbedingt notwendig ist, jedoch erforderlich ist bei der Digitalisierung von Mikrofilm-Jackets.

Der Rahmen besteht gemäß Anspruch 17 aus Hohlprofilen, wobei die innenliegenden Profilwände an ihren zur Unterlage weisenden Enden Öffnungen aufweisen und die Hohlräume in den Hohlprofilen evakuierbar sind. Die innenliegenden Profilwände des Rahmens weisen eine bestimmte Neigung auf, so daß sich beim Herabfallen des zu digitalisierenden Dokuments ein Selbstzentrierungseffekt ergibt. Sobald die Vorlage im Rahmen liegt, werden die Hohlräume des Rahmens evakuiert, so daß sich unterhalb der Vorlage ein Unterdruck ergibt, der die Vorlage plan an die Unterlage andrückt.

Wie oben ausgeführt reicht dieser Unterdruck aus, ein Mikrofich völlig plan an die Unterlage anzudrücken, ohne daß das Auflegen einer Glasplatte erforderlich wäre.

Beim Abarbeiten eines Mikrofilm-Jackets wird durch das Anlegen des Unterdrucks zwar die Unterseite des Mikrofilm-Jackets an die Unterlage angedrückt. Die taschenförmigen Aufnahmestreifen für die Vorlagen weisen diese Planität aber nicht auf. Hier ist es erforderlich, daß zusätzlich eine Glasplatte aufgelegt wird.

Nach dem Digitalisierungsvorgang wird die Glasplatte nach oben weggeschwenkt. Der Unterdruck unterhalb der Vorlage wird noch aufrechterhalten, so daß die Vorlage nicht an der hochfahrenden Glasplatte haften bleiben kann.

Sobald die Glasplatte nach hinten weggeschwenkt ist, fährt das Transportmittel über den Vorlagenträger und saugt die digitalisierte Vorlage an. Auf dem Weg zum Aufnahmemagazin wirft das Transportmittel die Vorlage über dem Ablagemagazin ab. Das Ablagemagazin befindet sich gemäß Anspruch 20 am Boden eines Gehäuses, das an seiner Oberseite eine den Abmessungen der Vorlage entsprechende Öffnung aufweist, von der eine Führung zum Ablagemagazin verläuft, die so ausgestaltet ist, daß die durch die Öffnung fallende Vorlage einen Weg beschreibt, der sie um 180° dreht.

Die die Vorlagen plananlegende Glasplatte ist gemäß Anspruch 16 an zwei U-förmigen Kragarmen mit Spiel befestigt, die mittels eines Elektromotors aus der Abdeckstellung in eine Freigabestellung verschwenkbar sind. Die U-förmigen Kragarme reichen über das Profil einer Seite des Rahmens des Vorlagenträgers hinüber. An der Welle des Elektromotors ist ein Mitnehmer befestigt, der während der Rotation einen an einem der Kragarme befestigten Zapfen mitnimmt und hierdurch die an den Kragarmen befestigte Glasplatte nach oben verschwenkt.

Diese Konstruktion hat den Vorteil, daß die Glasplatte auch ohne Betätigung des Motors von Hand nach oben verschwenkt werden kann.

Die Glasplatte darf nicht starr gelagert sein, damit in jedem Falle ein planes Aufliegen auf der Vorlage gewährleistet ist.

Gemäß Anspruch 18 ist die Glasplatte mittels doppelseitigem Klebeband an den Kragarmen befestigt. Das Klebeband ist elastisch und wirkt wie ein weiteres Lager, das ein geringes Winkelspiel zuläßt. Auch die Lager der Kragarme weisen ein gewisses Spiel auf.

Zusätzlich können die Kragarme in der Nähe der Klebeverbindung ein zusätzliches Gelenk aufweisen, das ein Spiel von wenigen Winkelgraden zuläßt.

Gemäß Anspruch 21 ist das Ablagemagazin zwischen dem Aufnahmemagazin und dem Vorlagenträger angeordnet. Hierdurch ergeben sich für das Transportmittel kurze Wege.

Es ist jedoch auch möglich, daß - wie Anspruch 22 vorschlägt - der Vorlagenträger zwischen dem Aufnahme- und dem Ablagemagazin angeordnet ist. Gerade bei einer derartigen Ausführungsform ist gemäß Anspruch 23 vorgesehen, daß für den Transport der Vorlage vom Vorlagenträger zum Ablagemagazin ein zweites Transportmittel vorgesehen ist, das um einen Winkel von etwa 150° entgegen dem Uhrzeigersinn oder um etwa 210° im Uhrzeigersinn in einer Ebene senkrecht zur Vorlagenträgerebene verschwenkbar ist. Ein Vorteil dieser Ausführungsform ist darin zu sehen, daß während dieses zweite Transportmittel die abgearbeitete Vorlage aufnimmt das erste Transportmittel eine neue Vorlage zum Digitalisieren ansaugen kann.

Das zweite Transportmittel verschwenkt die angesaugte Vorlage so, daß sie auf einer schiefen Ebene zu liegen kommt, von der sie nach Beendigung der Saugwirkung unter dem Einfluß der Schwerkraft in das Ablagemagazin gleiten kann, wo sie um 180° zur Ausgangslage zu liegen kommt. Hierdurch wird ebenfalls wie bei der ersten Alternative (Anspruch 20) erreicht, daß die abgearbeiteten Vorlagen wieder in der gleichen Reihenfolge aus dem Ablagemagazin entnommen werden können, d.h., daß die Vorlagen in der gleichen Reihenfolge liegen wie sie im Aufnahmemagazin lagen.

Beim Verschwenkvorgang des zweiten Transportmittels öffnen sich gemäß Anspruch 24 in der Verschwenkführung angeordnete Schlitze, die dann die Ansaugöffnung bzw. Ansaugöffnungen in der Platte mit der Saugvorrichtung verbinden bzw. sie von ihr trennen.

In erster Linie bei einem Transportmittel der letztgenannten Art ist durch verschließbare Öffnungen oberhalb der Ansaugöffnungen in dem Transportmittel eine Verbindung mit der Atmosphäre herstellbar. Hierdurch wird der Ablösevorgang der Vorlage von der schräggestellten Platte des Transportmittels durch Schwerkraftwirkung unterstützt und erleichtert.

Bei allen Erfindungsvarianten ist es für die Funktion "trennen" der Vorlagen im Aufnahmemagazin unbedingt notwendig, daß zwischen der mit den Ansaugöffnungen versehenen Platte und den Oberkanten der Seitenteile des Aufnahmemagazins ein Spalt besteht. Ohne ihn kann eine gegebenenfalls an der zuvor angesaugten ersten Vorlage haftende weitere Vorlage nicht durch Saugen in entgegengesetzte Richtung entfernt werden. Die Spaltbreite kann durch Erhebungen auf den Oberkanten der Seitenteile erhalten werden, die gleichzeitig als Führungen zum seitlichen Verschieben der Platte dienen können.

Bevorzugterweise ist jedoch vorgesehen, daß diese Spaltbereiche beispielsweise durch Räder erzeugt werden, auf denen das Transportmittel verfahrbar ist. Die Räder sind so dimensioniert, daß die Bodenfreiheit des Transportmittels ausreicht, den Spalt zu erzeugen.

Die Erfindung wird im folgenden anhand von Zeichnungen dargestellt und näher erläutert.

Es zeigen:
- Fig. 1: den prinzipiellen Aufbau einer ersten Alternative der Vorrichtung
- Fig. 2: im Schnitt das Aufnahmemagazin mit darauf angeordnetem Transportmittel in einer ersten Ausführungsform gemäß Alternative 1,
- Fig. 3: Anordnung gemäß Fig. 2 in einer zweiten Ausführungsform gemäß Alternative 1,
- Fig. 4: Aufbau einer zweiten Alternative der Vorrichtung,
- Fig. 5: Aufnahmemagazin mit darüber angeordneter Transportvorrichtung im Schnitt,

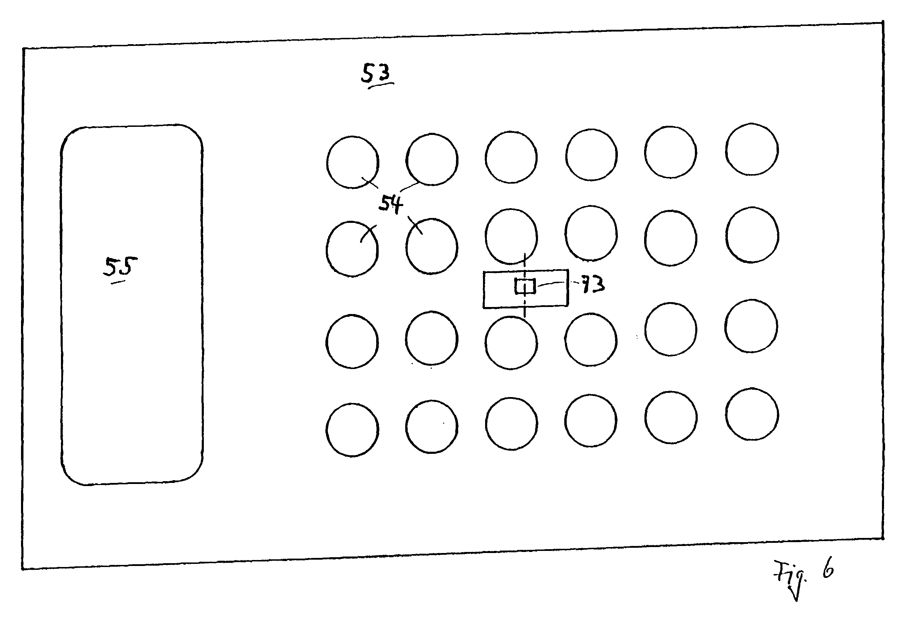

- Fig. 6: Bodenplatte des Transportmittels mit Ansaugöffnungen,
- Fig. 7: Seitenansichten teilweise im Schnitt eines Vorlagenträgers,
- Fig. 8: Vorlagenträger gemäß Fig. 7 mit darüber angeordnetem Transportmittel,
- Fig. 9: -Vorlagenträger im Schnitt mit eingelegter Vorlage und aufgesetzter Glasplatte.

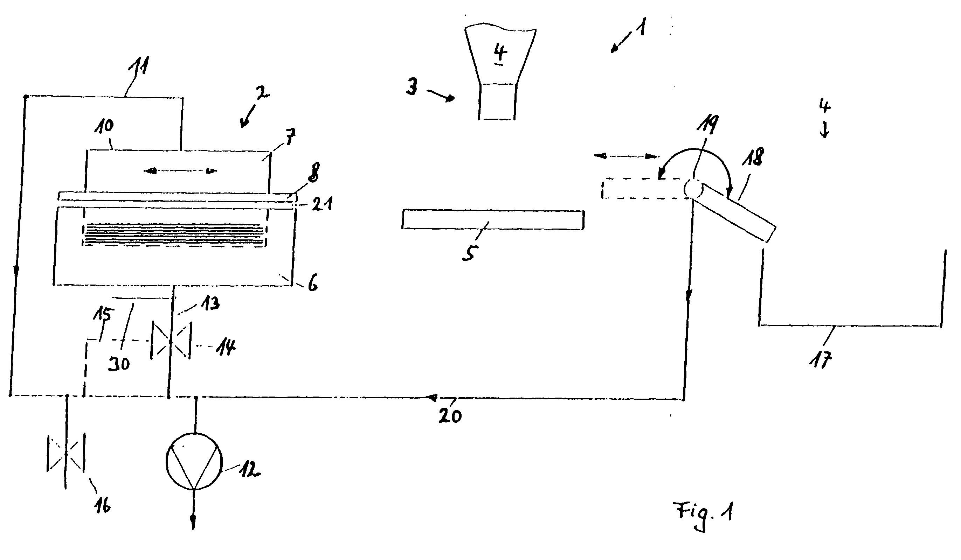

In der Fig. 1 ist im Prinzip eine Vorrichtung zur Digitalisierung von Dokumentenvorlagen wie Mikrofiches, Mikrofilm-Jackets oder ähnlichem dargestellt und allgemein mit dem Bezugszeichen 1 versehen.

Sie besteht im wesentlichen aus drei Teilen, nämlich der Vorlagenzuführung 2, der eigentlichen Digitalisierungsvorrichtung 3, die jedoch lediglich angedeutet ist und der Vorlagenabführung 4. Die Digitalisierungsvorrichtung 3 besteht aus dem Digitalisierungsgerät 4 und einem Vorlagenträger 5.

Die Vorlagenzuführung 2 besteht aus einem Aufnahmemagazin 6 und einem darüber angeordnetem Transportmittel 7, das die Vorlage aus dem Aufnahmemagazin 6 entnimmt und seitlich über den Vorlagenträger 5 fährt, auf den die Vorlage abgelegt wird.

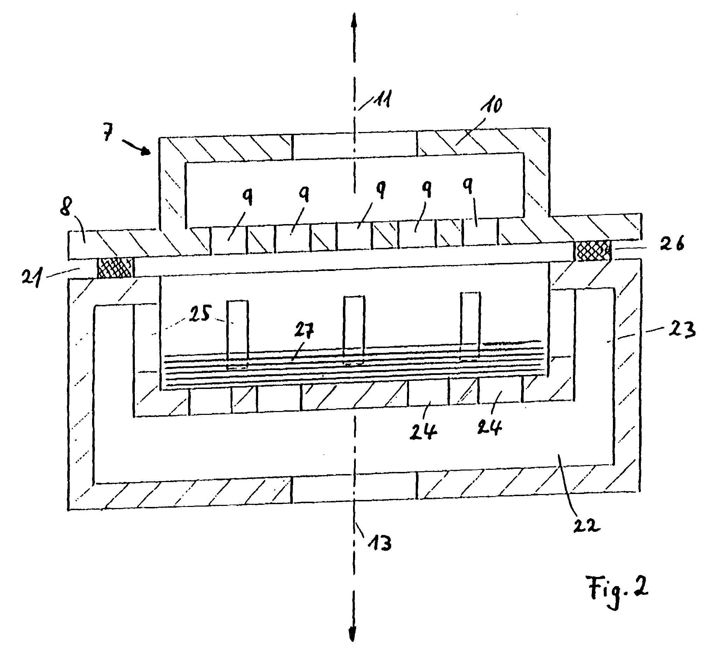

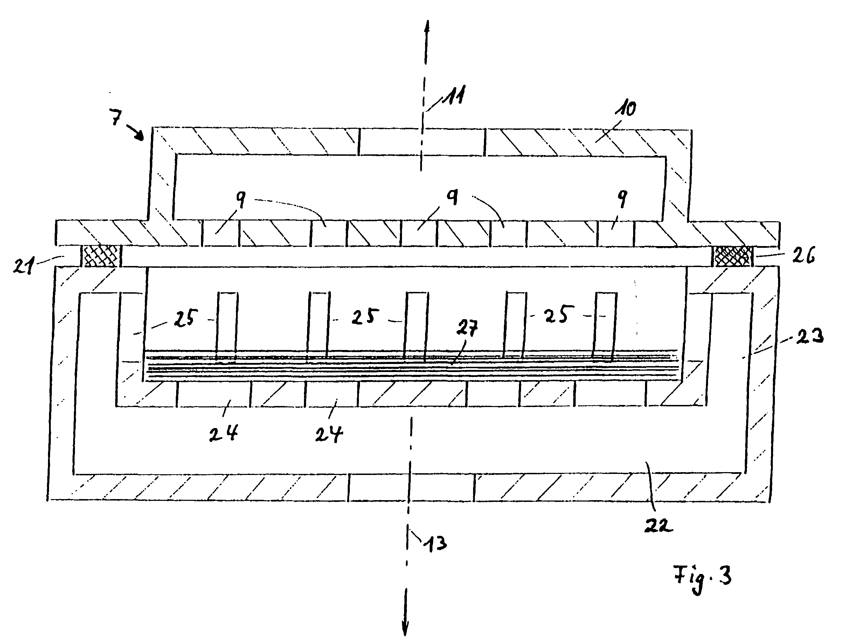

Das Aufnahmemagazin 6 ist in den Figuren 2 und 3 detaillierter dargestellt. Das Transportmittel 7 besteht aus einer ebenen Platte 8, in welcher Ansaugöffnungen 9 vorgesehen sind, die in einem auf der Platte 8 angeordneten kastenförmigen Raum 10 münden. In der oberen Wand des Kastens 10 ist eine aus einem flexiblem Schlauch bestehende Leitung 11 angeschlossen, die zu einer Vakuumpumpe 12 führt. Im Boden des Aufnahmemagazins 6 ist eine weitere, ebenfalls aus einem flexiblen Schlauch bestehende Leitung 13 angeschlossen, die ebenfalls mit der Vakuumpumpe 12 verbunden ist. In der Leitung 13 ist ein Grenzdruckventil 14 angeordnet. Um die Ansaugung der Vorlage zu gewährleisten, besteht von der Leitung 13 eine Verbindung zur Umgebung. Dies kann durch eine permanent geöffnete By-Pass-Leitung 30 oberhalb des Ventils 14 erfolgen. Alternativ kann das Ventil 14 so ausgebildet sein, daß bei Nichtverbindung der Leitung 13 mit der Leitung 20 (bei geringem bzw. keinem Unterdruck) die Leitung 13 über einen zusätzlichen Anschluss mit der Umgebung verbunden ist. Verbindet das Ventil 14 die Leitungen 13 und 20 (bei hohem Unterdruck), wird die Verbindung von der Leitung 13 zur Umgebung geschlossen. Vom Grenzdruckventil 14 zur Leitung 11 führt eine By-pass-Leitung 15 mit einem By-pass-Ventil 16. Die Abführvorrichtung 4 besteht aus einem Ablagemagazin 17 sowie einem weiteren Transportmittel 18, welches ebenfalls aus einem plattenförmigen Element bestehen kann, in dem zumindest eine Ansaugöffnung vorgesehen ist. Die Platte 18 ist um die Drehachse 19 verschwenkbar gelagert. Die Ansaugöffnung in der Platte 18 wird über nicht dargestellte Öffnungen im Bereich der Drehachse 19 über eine aus einem flexiblen Schlauch bestehende Leitung 20 mit der Vakuumpumpe 12 verbunden. Die Öffnungen im Bereich der Drehachse 19 sind in der gestrichelt dargestellten Stellung der Platte 18 geöffnet, während sie in der in durchgezogenen Linien dargestellten Stellung verschlossen sind.

Die Platte 18 wird in der gestrichelt dargestellten Stellung seitlich über den Vorlagenträger 5 verschoben. Die Anordnung dieser Platte 18 kann jedoch auch so aussehen, daß die Stellung über dem Vorlagenträger 5 allein durch den Verschwenkvorgang aus der ausgezogen dargestellten Stellung in die gestrichelt dargestellte Stellung erfolgt.

In der Platte 18 ist darüber hinaus eine nicht dargestellte verschließbare Öffnung vorgesehen.

Im folgenden wird der Verfahrensablauf anhand der Fig. l dargestellt:
Das Aufnahmemagazin 6 ist mit einem Stapel von Vorlagen gefüllt. Das Grenzdruckventil 14 und das By-Pass-Ventil 16 sind geschlossen. Oberhalb des Aufnahmemagazins befindet sich das Transportmittel 7. Zwischen der Platte 8 des Transportmittels 7 und der Oberkante des Aufnahmemagazins 6 befindet sich ein Spalt 21. Die Vakuumpumpe 12 wird gestartet. Die oberste Vorlage im Aufnahmemagazin 6 wird vom Transportmittel 7 angesaugt und verschließt dabei die Ansaugöffnungen 9. Nun wird das Grenzdruckventil 14 geöffnet. Der Reststapel im Aufnahmemagazin 6 wird angesaugt und gleichzeitig damit eventuell an der angesaugten Vorlage anhaftende weitere Vorlagen. Das Vakuum wird auf einen geringeren Wert heruntergeregelt. Das Transportmittel mit der daran haftenden Vorlage wird seitlich über den Vorlagenträger 5 verschoben. Die Vakuumpumpe wird abgeschaltet. Damit das Vakuum schnell zusammenbricht und die Vorlage auf den Vorlagenträger 5 herunterfallen kann, wird das By-pass-Ventil 16 geöffnet. Alternativ kann hierzu auch die Ausblasseite der Vakuumpumpe kurz verschlossen werden oder der Motor der Vakuumpumpe elektrisch oder mechanisch abgebremst werden.

Nach der Ablage der Vorlage auf dem Vorlagenträger 5 fährt das Transportmittel 7 in die Ausgangsstellung zurück. Nun wird die Vorlage von der Digitalisierungsvorrichtung 3 digitalisiert. Nach dem Digitalisierungsvorgang fährt das Transportmittel 18 über den Vorlagenträger 5. Die Öffnungen im Drehbereich 19 der Platte 19 sind geöffnet, womit die Verbindung zur Vakuumpumpe hergestellt ist. Die Vakuumpumpe wird erneut gestartet, so daß die Vorlage vom Vorlagenträger 5 an die Platte 18 angesaugt wird und dort die Ansaugöffnung verschließt. Durch Verschwenken der Platte 18 um etwa 210° im Uhrzeigersinn gelangt die Platte 18 seitlich an das Ablagemagazin 17. Durch die Verschwenkbewegung werden die Öffnungen im Drehbereich 19 der Platte wieder geschlossen und die weitere Öffnung in der Platte 18 wird geöffnet, so daß ein Druckausgleich mit der Umgebung stattfindet. Die Vorlage rutscht selbsttätig in das Ablagemagazin 17.

Gleichzeitig mit dem Ansaugvorgang der Vorlage vom Vorlagenträger 5 an die Platte 18 wird bei geschlossenem Grenzdruckventil 14 und By-pass-Ventil 16 die nächste Vorlage vom Transportmittel 7 angesaugt, und der Vorgang wiederholt sich wie eben beschrieben.

Dadurch, daß die Platte 18 nach dem Ansaugvorgang um etwa 210° im Uhrzeigersinn verschwenkt wird, gelangen die Vorlagen in der richtigen Reihenfolge - allerdings um 180° gedreht - in das Ablagemagazin 17.

In den Figuren 2 und 3 sind zwei Ausführungsbeispiele des Aufnahmemagazins 6 mit zugehörigem Transportmittel 7 dargestellt. Das Aufnahmemagazin 6 besteht aus einem Behälter mit einem doppelwandigen Bodenteil 22 und ebenfalls doppelwandigen Seitenteilen 23. Sowohl in der Innenwand des Bodenteils 22 als in der Innenwand der Seitenteile 23 sind Öffnungen 24, 25 vorgesehen, wobei die Öffnungen 25 in den Seitenteilen verschließbar ausgebildet sind.

Auf den Oberkanten der Seitenteile 23 sind Erhebungen 26 angebracht, die zur Erzeugung des Spaltes 21 zwischen Aufnahmemagazin 6 und der Platte (8)des Transportmittels 7 dienen.

Die verschließbaren Öffnungen 25 im Innenwandbereich der Seitenteile 23 dienen zur Optimierung der Strömungsverhältnisse beim Ansaugen der obersten Vorlage auf dem Vorlagenstapel 27 (Öffnungen 25 geschlossen) sowie beim Rücksaugvorgang neu an der angesaugten Vorlage anhaftenden Vorlagen (Öffnungen 25 geöffnet).

Die Darstellung in den Figuren 2 und 3 unterscheiden sich lediglich in den Abmessungen der oben dargestellten Elemente und sind deshalb mit den gleichen Bezugszeichen versehen.

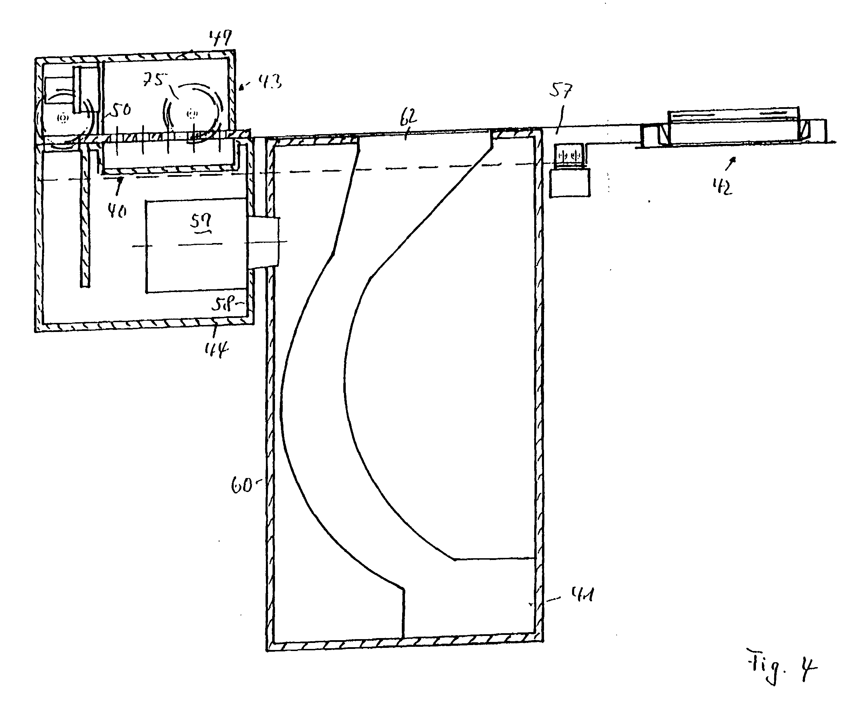

In der Fig. 4 ist eine bevorzugte Ausführungsform der erfindungsgemäßen Vorrichtung dargestellt.

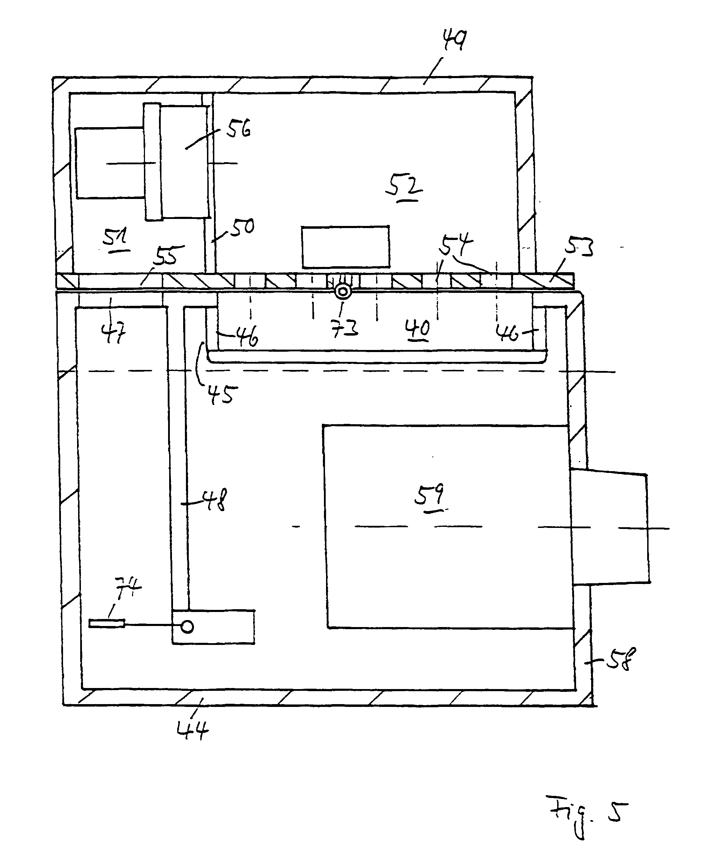

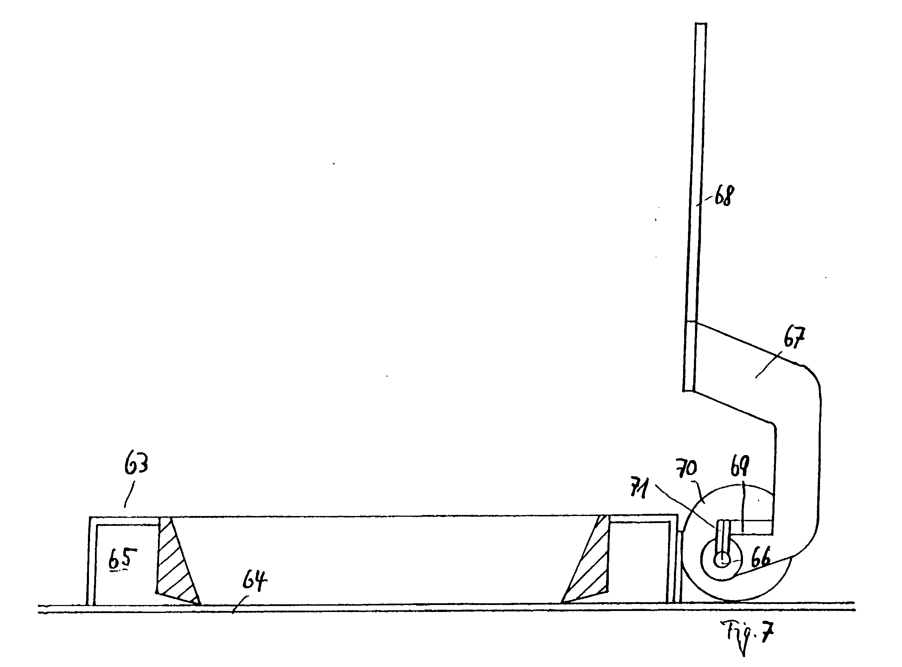

Sie besteht aus einem Aufnahmemagazin 40, welches in Fig. 5 in größerem Maßstab dargestellt ist, einem Ablagemagazin 41 und einem Vorlagenträger 42, der in den Fig. 7 bis 9 detaillierter dargestellt wird. Wie in den Fig. 4 und 5 dargestellt, befindet sich ein Transportmittel für die abzuarbeitenden Vorlagen über dem Aufnahmemagazin 40 und ist allgemein mit dem Bezugszeichen 43 versehen.

Das Aufnahmemagazin 40 befindet sich im oberen Bereich eines Gehäuses 44, derart, daß die Seitenteile des Aufnahmemagazins 40 doppelwandig ausgebildet sind und auch der Boden des Magazins doppelwandig ist. In den inneren Seitenwänden 45 befinden sich schlitzförmige Öffnungen 46, während der innere Boden des Aufnahmemagazins 40 eine geschlossene Fläche bildet. Seitlich neben dem Aufnahmemagazin 40 befindet sich in der Oberseite des Gehäuses 44 eine Öffnung 47, die mittels einer nicht ganz bis zum Boden des Gehäuses 44 hinabreichenden Trennwand 48 von dem Aufnahmemagazin 40 abgeteilt ist.

Wie in den Fig. 4 und 5 dargestellt, befindet sich über dem Aufnahmemagazin 40 ein seitlich verfahrbares Transportmittels 43, welches ein Gehäuse 49 aufweist, welches mittels einer Trennwand 50 in zwei Teilbereiche 51 und 52 aufgeteilt ist. Der größere Teilbereich 52 befindet sich direkt über dem Aufnahmemagazin 40 und weist im Bodenbereich 53 matrixförmig angeordnete Ansaugöffnungen 54 auf. Im Bodenteil 53 des Teilbereichs 51 ist eine Öffnung 55 vorgesehen, die in der dargestellten Stellung mit der Öffnung 47 fluchtet. In der Trennwand 50 ist ein Sauggebläse 56 angeordnet, welches Luft aus dem Teilbereich 52 und damit durch die Ansaugöffnungen 54 aus dem Aufnahmemagazin absaugt und die abgesaugte Luft über die Öffnung 55 und die Öffnung 47 in das Gehäuse 44 bläst.

Das Transportmittel 43, bzw. das Gehäuse 49 ist mittels Rädern 75 auf Schienen 57 seitlich verfahrbar. Räder 75 und Schienen 57 sind dabei so angeordnet, daß zwischen der Oberseite des Gehäuses 44 und dem Bodenbereich 53 des Transportmittels 43 ein Luftspalt verbleibt.

Im Gehäuse 44, und zwar in einer Seitenwand 58, ist ein weiteres Sauggebläuse 59 angeordnet, welches den Innenraum des Gehäuses 44 evakuiert. Die angesaugte Luft wird im vorliegenden Ausführungsbeispiel, durch eine Öffnung im Gehäuse 60 des Ablagemagazins 41 in dieses eingeblasen. Das Ablagemagazin 41 befindet sich im unteren Bereich des Gehäuses 60, und zwar am Ende einer Kurvenführung 61, die in der Oberseite des Gehäuses 60 beginnt. Hier ist eine Öffnung 62 vorgesehen, die in ihren Abmessungen in etwa mit den Abmessungen einer abzuarbeitenden Vorlage übereinstimmt.

Die Kurvenführung 61 ist so ausgebildet, daß eine von dem Transportmittel 43 in die Öffnung 62 abgeworfene Vorlage auf ihrem Weg bis zum Ablagemagazin 41 eine Drehung um 180° vollführt.

Auf der vom Aufnahmemagazin 40 abgewandten Seite des Ablagemagazins 41 befindet sich der Vorlagenträger 42, der nun anhand der Fig. 7 bis 9 genauer beschrieben wird. Der Vorlagenträger 42 besteht im wesentlichen aus einem rechteckförmigen Rahmen 63, der auf einer durchscheinenden Unterlage 64 angeordnet ist, unter welcher sich eine Beleuchtungsvorrichtung befindet. Der Rahmen besteht aus Hohlprofilen, wobei die aufeinander zuweisenden inneren Profilseiten schräg geneigt sind, so daß sich ein trichterförmiger Aufbau ergibt, der zur Selbstzentrierung der vom Transportmittel 43 abgeworfenen Vorlagen dient. Die Hohlräume 65 der Hohlprofile stehen über schlitzförmige Öffnungen 66 zwischen dem unteren Rand der inneren Profilseiten und der Unterlage 64 mit der Atmosphäre in Verbindung und sind mittels einer nicht dargestellten Saugvorrichtung evakuierbar.

An der rückwärtigen Seite des Rahmens 63 ist an einem Drehlager 66 mittels U-förmiger Kragarme 67 eine am vorderen Ende der Kragarme befestigte Glasplatte 68 angeordnet.

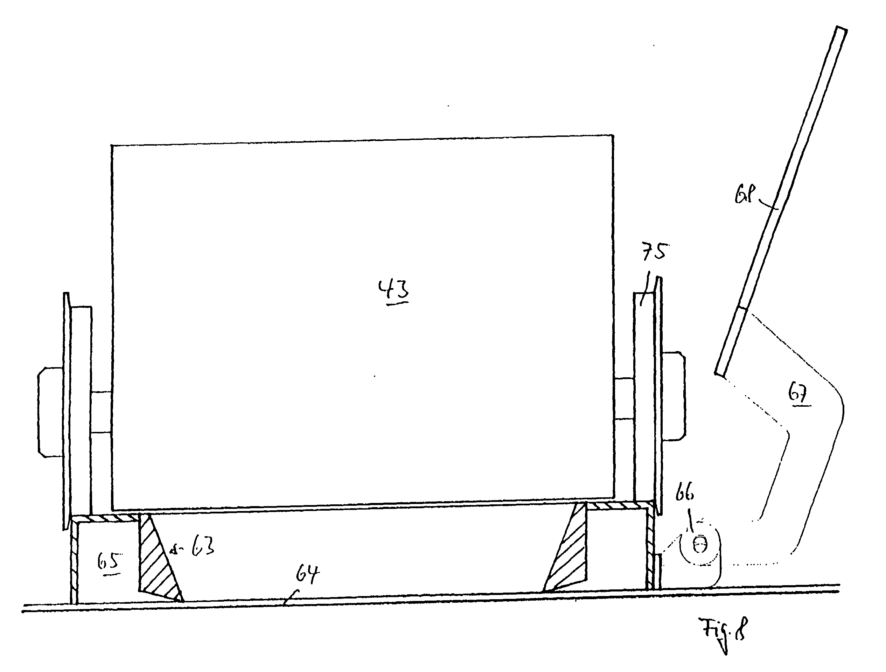

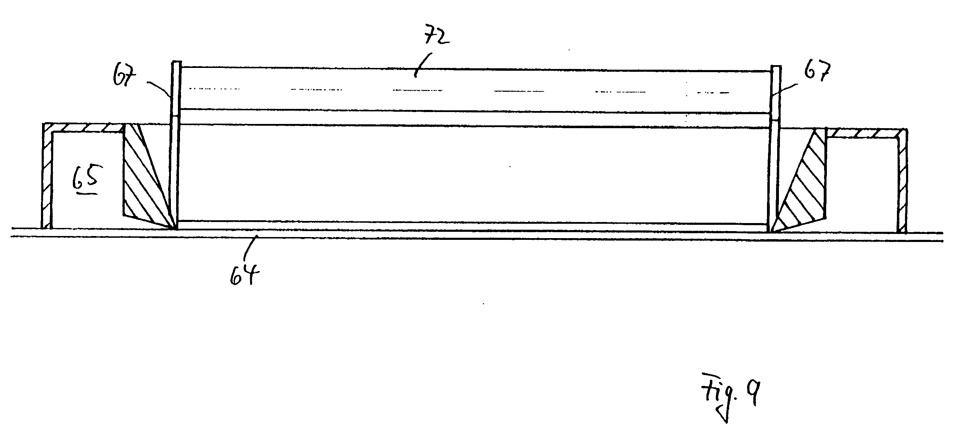

An einem der Kragarme ist ein Zapfen 69 vorgesehen, gegen den ein auf der Welle eines Elektromotors 70 befestigter Stift 71 gefahren werden kann, wodurch die Glasplatte 68 aus einer Abdeckstellung (die Glasplatte befindet sich innerhalb des Rahmens auf der darunter befindlichen Vorlage -Fig. 9) bis in die in Fig. 8 dargestellte Stellung verschwenkt werden kann.

Die Fig. 8 stellt die Situation dar, wenn das Transportmittel 43 mit einer angesaugten Vorlage über den Vorlagenhalter 42 gefahren ist. Wie aus dieser Zeichnung ebenfalls hervorgeht, dienen die Hohlprofile gleichzeitig als Führungsschienen für die Räder des Transportmittels 43.

Bevorzugterweise wird die Glasplatte 68 mittels doppelseitiger Klebebänder an den Kragarmen 67 befestigt. Das Klebeband ist elastisch und wirkt wie ein weiteres Lager, das ein geringes winkelspiel zuläßt. Hierdurch und auch durch eine ausreichende Toleranz in den Lagern (Lager und Getriebemotorwelle) hat die Glasplatte so viel Spiel, daß sie in jedem Fall plan aufliegt.

Wie aus Fig. 9 hervorgeht, sind die Kragarme 67 mittels einer oder auch zweier Traversen 72 miteinander verbunden.

Der Verfahrensablauf bei dieser Vorrichtung wird im folgenden beschrieben:
Im Aufnahmemagazin 40 befindet sich ein nicht dargestellter Stapel von abzuarbeitenden (beispielsweise zu digitalisierenden) Vorlagen wie Mikrofiches oder Mikrofilm-Jackets. Das Transportmittel 43 wird über das Aufnahmemagazin 40 gefahren, wie in den Fig. 4 und 5 dargestellt. Die Glasplatte 68 befindet sich in der in Fig. 8 dargestellten Stellung.

Nun wird das Sauggebläse 56 gestartet. Dabei wird eine Vorlage aus dem Aufnahmemagazin 40 an die Bodenplatte 53 des Gehäuses 49 angesaugt und verschließt dabei die Ansaugöffnungen 54. Hierdurch wird ein in dieser Bodenplatte 53 angeordneter Mikroschalter 73 betätigt, wodurch ein Signal ausgelöst wird, durch das das Sauggebläse 59 gestartet wird. Das Sauggebläse 59 evakuiert das Gehäuse 44, wobei infolge der schlitzförmigen Öffnungen 46 in den Seitenwänden des Aufnahmemagazins und infolge des zwischen Transportmittel 43 und Aufnahmemagazin 40 vorhandenen Spaltes der Reststapel im Aufnahmemagazin 40 zurückgehalten wird, so daß sichergestellt ist, daß lediglich eine Vorlage am Transportmittel 43 haftet.

Man kann jedoch auch auf diesen Mikroschalter 73 verzichtet, und stattdessen in den Strömungsweg der vom Sauggebläse 56 durch die Öffnungen 55 und 47 geblasenen Luft einen durch den Luftstrom gegen die Kraft einer Feder ausgelenkten Mikroschalter 74 vorsehen. Ist eine Vorlage angesaugt, d.h. sind die Ansaugöffnungen 54 verschlossen, ist der Luftstrom unterbrochen und der Schalter 74 schwingt in die Ausgangsstellung zurück. Hierdurch wird ein Signal erzeugt, das ebenfalls das Sauggebläse 59 in Tätigkeit setzt.

Eine dritte Möglichkeit besteht darin, einen bestimmten Zeitfaktor vorzusehen, der einen Zeitraum definiert, nach dem das Transportmittel 43 nach Beginn der Saugtätigkeit des Sauggebläses 56 in Richtung Vorlagenhalter 42 losfährt.

Das Transportmittel 43 mit an seiner Unterseite haftender Vorlage wird über das Gehäuse 60 des Ablagemagazins 41 hinweg verfahren, bis es sich direkt oberhalb des Vorlagenträgers 42 befindet (s. Fig. 8). Das Sauggebläse 56 wird abgeschaltet und die Vorlage fällt in den Vorlagenträger 42.

Bei der oben dargestellten Variante mit dem Mikroschalter 73 dient die Federkraft des Mikroschalters 73 dazu, diese Abwurfbewegung zu unterstützen.

Das Transportmittel 43 führt Richtung Gehäuse 60 des Ablagemagazins 41. Die Glasplatte 68 wird auf die Vorlage aufgesetzt. Nun erfolgt der Digitalisierungsprozeß, nachdem optional die Vorlage durch die Evakuierung der Hohlräume 65 des Rahmens 63 an die Unterlage 64 angesaugt worden ist. Nach dem Digitalisierungsvorgang schwenkt die Glasplatte 68 wieder nach oben, wobei die Vorlage durch das noch herrschende Vakuum auf der Unterlage 64 verbleibt. Danach wird dieses Vakuum beendet, das Transportmittel 43 führt über den Vorlagenträger 42, saugt die digitalisierte Vorlage an und führt zurück über das Gehäuse 60 des Ablagemagazins 41 und wirft nach Abschaltung des Gebläses 56 die Vorlage durch die Öffnung 62 über die Führung 61 in das Ablagemagazin 41. Danach fährt das Transportmittel 43 wieder über das Aufnahmemagazin 40 und der eben geschilderte Vorgang wiederholt sich.

## Patentansprüche

1. Verfahren zum automatischen Einzug von auf einem Sichtgerät anzuzeigenden und/oder in einem Digitalisierungsgerät (3) abzulichtenden Dokumentenvorlagen wie Mikrofiches, Mikrofilm-Jackets oder ähnlichem, bei dem aus einem Aufnahmemagazin (6, 46) für einen Stapel abzuarbeitender Vorlagen jeweils eine Vorlage einem Vorlagenträger (5, 42) zugeführt wird und von dort einem Ablagemagazin (17, 41) für die abgearbeiteten Vorlagen, wobei von einem in dem Aufnahmemagazin liegenden Vorlagenstapel die oberste Vorlage angesaugt wird, die angesaugte Vorlage seitlich zum Vorlagenträger transportiert und durch Beenden der Saugwirkung auf diesen abgelegt wird, und nach Abarbeiten der Vorlage dieselbe wiederum angesaugt und zum Ablagemagazin transportiert wird,
**dadurch gekennzeichnet,**
**daß** die oberste Vorlage des Stapels nach oben auf etwa Vorlagenträgerniveau angesaugt und danach der Reststapel durch Ansaugen in entgegengesetzter Richtung im Magazin gehalten wird.

2. Verfahren nach Anspruch 1,
**dadurch gekennzeichnet,**
**daß** die Transportbewegung vom Aufnahmemagazin zum Vorlagenträger erst beginnt, wenn mittels eines Sensors (73) festgestellt worden ist, dass eine Vorlage angesaugt worden ist.

3. Verfahren nach Anspruch 1 oder 2,
**dadurch gekennzeichnet,**
**daß** die auf dem Vorlagenträger abgelegte Vorlage mittels einer Glasscheibe (68) abgedeckt wird.

4. verfahren nach einem der Ansprüche 1 bis 3,
**dadurch gekennzeichnet,**
**daß** die über den Vorlagenträger (42) transportierte Vorlage nach Beendigung der Ansaugwirkung federunterstützt auf den Vorlagenträger abgeworfen wird.

5. Verfahren nach einem der Ansprüche 1 bis 4,
**dadurch gekennzeichnet,**
**daß** die Vorlage von einem Transportmittel (43) aus dem Aufnahmemagazin (40) angesaugt, auf dem Vorlagenträger (42) abgelegt, nach der Digitalisierung von dem gleichen Transportmittel wiederum angesaugt und auf dem Weg zurück zum Aufnahmemagazin (41) in das Ablagemagazin abgeworfen wird.

6. Verfahren nach einem der Ansprüche 1 bis 4,
**dadurch gekennzeichnet,**
**daß** die Vorlage aus dem Aufnahmemagazin (6) von einem Transportmittel (7) angesaugt wird, auf dem Vorlagenträger abgelegt und nach der Digitalisierung von einem zweiten Transportmittel (18) wiederum angesaugt und von diesem im Ablagemagazin (17) abgelegt wird.

7. Verfahren nach Anspruch 6,
**dadurch gekennzeichnet.**
**daß** die Vorlage nach dem Aufnehmen vom Vorlagenträger auf dem Weg zum Ablagemagazin um etwa 150° entgegen dem Uhrzeigersinn oder um etwa 210° im Uhrzeigersinn gedreht wird, und nach Beendigung der Saugwirkung schräg in das Ablagemagazin (17) gleitet.

8. Verfahren nach einem der Ansprüche 1 bis 6,
**dadurch gekennzeichnet,**
**daß** nach dem Aufnehmen der Vorlage vom Vorlagenträger (5, 42) die Vorlage geführt in das Ablagemagazin (17, 42) abgeworfen wird, derart, daß die Vorlage dabei um 180° gedreht wird.

9. Verfahren nach einem oder mehreren der Ansprüche 1 bis 8,
**dadurch gekennzeichnet,**
**daß** vor dem Ansaugen der obersten Vorlage der gesamte Vorlagenstapel durch Beaufschlagen mit Druckluft von unten angehoben und nach Ansaugen der obersten Vorlage durch Umschalten von Blas- auf Saugbetrieb zum Boden des Magazins (6,40) zurückgesaugt wird.

10. Vorrichtung zum automatischen Einzug von auf einem Sichtgerät anzuzeigenden und/oder in einem Digitalisierungsgerät (3) abzulichtenden Dokumentenvorlage wie Mikrofiches, Mikrofilm-Jackets oder ähnlichem, mit einem Aufnahmemagazin (6, 46) für einen Stapel abzuarbeitender Vorlagen, einem Vorlagenträger (5, 42) und einem Ablagemagazin (17, 41) für die abgearbeiteten Vorlagen, wobei Mittel (7, 8; 18) zum Transport einer Vorlage zum Aufnahmemagazin zum Vorlagenträger und zum Transport der Vorlage vom Vorlagenträger zum Ablagemagazin vorgesehen sind, wobei das Mittel (7, 43) zum Transport einer Vorlage vom Aufnahmemagazin zum Vorlagenträger aus einer mit Ansaugöffnungen (9, 54) versehenen ebenen Platte (8, 53) besteht, wobei die Ansaugöffnungen mit einer Saugvorrichtung (12 ; 56, 59) verbunden und durch die angesaugte Vorlage vollständig abdeckbar sind
**dadurch gekennzeichnet,**
**daß** das Aufnahmemagazin aus einem der Größe der Vorlagen angepassten Behälter mit einem doppelwandigen Bodenteil und von diesem aufsteigenden doppelwandigen Seitenteilen besteht, derart, daß Boden- und Seitenteile einen gemeinsamen Innenhohlraum bilden, der mittels einer Saugvorrichtung evakuierbar ist, daß die inneren Wände der Seitenteile Öffnungen aufweisen, und daß Mittel zur Ausbildung von Spaltenbereichen (21) zwischen der Platte und den Seitenteilen vorgesehen sind.

11. Vorrichtung nach Anspruch 10,
**dadurch gekennzeichnet,**
**daß** die mit den Ansaugöffnungen versehene ebene Platte Teil eines auf Führungen verfahrbaren Gehäuses (49) ist, welches mittels einer Zwischenwand (50) in zwei Teilbereiche (51,52) aufgeteilt ist, wobei einer (54) der Teilbereiche oberhalb der Ansaugöffnungen angeordnet ist und mittels eines im zweiten (51) Teilbereich angeordneten Sauggebläses (56) evakuierbar ist, wobei der zweite Teilbereich (51) eine Öffnung (55) aufweist, die mit einer Öffnung (47) im Aufnahmemagazin fluchtet, derart, daß die aus dem ersten Teilbereich (52) angesaugte Luft in den doppelwandigen Bodenteil des Aufnahmemagazins gelangt.

12. Vorrichtung nach Anspruch 10 oder 11,
**dadurch gekennzeichnet,**
**daß** im doppelwandigen Bodenteil des Aufnahmemagazins ein Sauggebläse (59) angeordnet ist, welches gebläseseitig aus der Seitenwand des Aufnahmemagazins herausragt.

13. Vorrichtung nach einem der Ansprüche 10 bis 12,
**dadurch gekennzeichnet,**
**daß** in der mit Ansaugöffnungen versehenen ebenen Platte ein über die Ebene der Platte nach unten vorstehender Mikroschalter (73) angeordnet ist.

14. Vorrichtung nach einem der Ansprüche 10 bis 12,
daß im Aufnahmemagazin im Weg des Luftstromes vom im Transportmittel vorgesehenen Sauggebläse ein durch den Luftstrom betätigbarer Mikroschalter (74) vorgesehen ist.

15. Vorrichtung nach einem der Ansprüche 10 bis 14,
**dadurch gekennzeichnet,**
**daß** der Vorlagenträger aus einem den Abmessungen der Vorlage entsprechenden Rahmen (63) besteht, an dem eine die Vorlage abdeckende Glasplatte (68) anlenkbar ist.

16. Vorrichtung nach Anspruch 15,
**dadurch gekennzeichnet,**
**daß** die Glasplatte an zwei U-förmigen Kragarmen (67) mit Spiel befestigt ist, die mittels eines Elektromotors (70) aus der Abdeckstellung in eine Freigabestellung verschwenkbar sind.

17. Vorrichtung nach Anspruch 15 oder 16,
**dadurch gekennzeichnet,**
**daß** der Rahmen aus Hohlprofilen besteht, wobei die innenliegenden Profilwände an ihren zur Unterlage (64) weisenden Enden Öffnungen aufweisen, und die Hohlräume (65) in den Hohlprofilen evakuierbar sind.

18. Vorrichtung nach einem der Ansprüche 15 bis 17,
daß die Glasplatte (68) mittels doppelseitigem Klebeband an den
Kragarmen (67) befestigt ist.

19. Vorrichtung nach einem der Ansprüche 15 bis 18,
**dadurch gekennzeichnet,**
**daß** die Kragarme (67) im Bereich der Befestigungspunkte der Glasplatte gelenkig ausgebildet sind, derart, daß ein Spiel von wenigen Winkelgraden zugelassen ist.

20. Vorrichtung nach einem der Ansprüche 11 bis 19,
**dadurch gekennzeichnet,**
**daß** das Ablagemagazin (41) am Boden eines Gehäuses (60) angeordnet ist, daß an seiner Oberseite -eine den Abmessungen der Vorlage entsprechenden Öffnung (62) aufweist, von der eine Führung zum Ablagemagazin verläuft, die so ausgestaltet ist, daß die durch die Öffnung fallende Vorlage einen Weg beschreibt, der sie um 180° dreht.

21. Vorrichtung nach einem oder mehreren der Ansprüche 11 bis 20,
**dadurch gekennzeichnet,**
**daß** das Ablagemagazin (41) zwischen dem Aufnahmemagazin (40) und dem Vorlagenträger (42) angeordnet ist.

22. Vorrichtung nach einem der Ansprüche 10 bis 20,
**dadurch gekennzeichnet,**
**daß** der Vorlagenträger (50) zwischen dem Aufnahme- und dem Ablagemagazin (6;17) angeordnet ist.

23. Vorrichtung nach Anspruch 22,
**dadurch gekennzeichnet,**
**daß** für den Transport der Vorlage vom Vorlagenträger zum Ablagemagazin ein zweites Transportmittel (18, 19) vorgesehen ist, das um einen Winkel von etwa 150° entgegen dem Uhrzeigersinn oder um etwa 210° im Uhrzeigersinn in einer Ebene senkrecht zur Vorlagenträgerebene verschwenkbar ist.

24. Vorrichtung nach Anspruch 23,
**dadurch gekennzeichnet,**
**daß** Ansaugöffnungen in der Platte des zweiten Transportmittels über beim Verschwenkvorgang sich öffnende, in der Verschwenkführung angeordnete Schlitze mit der Saugvorrichtung verbindbar sind.

25. Vorrichtung nach einem der Ansprüche 10 bis 24,
**dadurch gekennzeichnet,**
**daß** durch verschließbare Öffnungen oberhalb der Ansaugöffnungen in dem/den Transportmitteln eine Verbindung mit der Atmosphäre herstellbar ist.

## Claims

1. Method for automatic feeding in of document copies such as microfiches, microfilm jackets or similar which are to be displayed on a viewer and/or copied into a digitiser (3), in which one copy at a time is passed from an input tray (6, 46) for a stack of document copies to be processed into a copy holder (5, 42) and from there to an output tray (17, 41) for the processed copies, whereby the topmost document of a stack of documents lying in the input tray is suctioned, the suctioned document is transported laterally to the copy holder and deposited thereon by stopping the suction, and after the document has been processed it is then suctioned again and transported to the output tray,
**characterised in that**
the topmost document of the stack is suctioned upwards to approximately document holder level and thereafter the remainder of the stack is held in the input tray by suction in the opposite direction.

2. Method according to claim 1,
**characterised in that**
the transport movement from the input tray to the copy holder only begins
when it has been determined by means of a sensor (73) that a copy has been suctioned.

3. Method according to claim 1 or 2,
**characterised in that**
the copy deposited on the copyholder is covered by means of a sheet of glass (68).

4. Method according to one of claims 1 to 3,
**characterised in that**
once the suction has ceased, the copy transported over the copy holder (42) is dropped onto the copy holder with the aid of a spring.

5. Method according to one of claims 1 to 4,
**characterised in that**
the copy is suctioned by a transport means (43) from the input tray (40), deposited on the copy holder (42), after digitisation is again suctioned by the same transport means and on the way back to the input tray (41) is dropped into the output tray.

6. Method according to one of claims 1 to 4,
**characterised in that**
the document is suctioned from the input tray (6) by a transport means (7), deposited on the copy holder and after digitisation is again suctioned by a second transport means (18) and is dropped by said second means into the output tray (17).

7. Method according to claim 6,
**characterised in that**
the copy is rotated by about 150° anticlockwise or by about 210° clockwise after being accepted by the copy holder on the way to the output tray, and once the suction has stopped slides at an angle into the output tray (17).

8. Method according to one of claims 1 to 6,
**characterised in that**
after the copy has been accepted by the copy holder (5, 42) the copy is guided out and dropped into the output tray (17, 42) in such a way that the copy is thereby rotated through 180°.

9. Method according to one or more of claims 1 to 8,
**characterised in that** before the topmost document is suctioned, the entire stack of documents is raised by being impinged upon by compressed air from below and, after the topmost copy has been suctioned, is suctioned back to the bottom of the tray (6, 40) by switching from blow to suction operation.

10. Device for the automatic feeding in of copies of documents such as microfiches, microfilm jackets or similar which are to be displayed on a viewer and/or copied into a digitiser (3), with an input tray (6, 46) for a stack of copies to be processed, a copy holder (5, 42) and an output tray (17, 41) for the processed copies, whereby means (7, 8; 18) are provided to transport a copy from the input tray to the copyholder and to transport the copy from the copy holder to the output tray are provided, whereby the means of transport of a document from the input tray to the copy holder consists of a level plate (8, 53) equipped with suction openings (9, 54), whereby the suction openings are connected with a suction device (12, 56, 59) and can be completely covered by the suctioned document,
**characterised in that**
the input tray consists of a container adapted to the size of the copies, with a double-walled base part and double-walled side parts ascending therefrom, in such a way that base and side parts form a common inner cavity, which can be evacuated by means of a suction device, that the inner walls of the side parts have openings, and that means to form gap areas (21) are provided between the plate and the side parts.

11. Device according to claim 10,
**characterised in that**
the flat plate provided with suction openings is part of a housing (49) moveable on guides which is divided by means of a partition wall into two partial areas (51, 52), whereby one (54) of the partial areas is disposed above the suction openings, and can be evacuated by means of a suction fan (56) disposed in the second (51) partial area, whereby the second partial area (51) has an opening (55) which is aligned with an opening (47) in the input tray in such a way that the air suctioned from the first part (52) goes into the double-walled base part of the input tray.

12. Device according to claim 10 or 11,
**characterised in that**
in the double-walled base part of the input tray there is a suction fan (59) which protrudes on the fan side out of the side wall of the input tray.

13. Device according to one of claims 10 to 12,
**characterised in that**
in the flat plate provided with suction openings, there is disposed a micro switch (73) projecting downwards over the level of the plate.

14. Device according to one of claims 10 to 12,
[characterised in that]
in the input tray, in the path of the air stream from the suction fan provided in the transport means, there is provided a micro switch (74) which can be actuated by the air stream.

15. Device according to one of claims 10 to 14,
**characterised in that**
the copy holder consists of a frame (63) corresponding to the dimensions of the copy, on which a glass plate (68) covering the copy can pivot.

16. Device according to claim 15,
**characterised in that**
the glass plate is fixed by two U-shaped jibs (67) with play, which are pivotable by means of an electromotor (70) from the covering position into a release position.

17. Device according to claim 15 or 16,
**characterised in that**
the frame is made from hollow profiles, whereby the inner profile walls have opening on their ends pointing towards the base (64) and the cavities (65) in the hollow profiles can be evacuated.

18. Device according to one of claims 15 to 17,
[characterised in that]
the glass plate (68) is fixed by means of a double-sided adhesive strip onto the jibs (67).

19. Device according to one of claims 15 to 18,
**characterised in that**
the jibs (67) are designed so as to swivel in the area of the fastening points, in such a way that play of a few degrees of angle is permitted.

20. Device according to one of claims 11 to 19,
**characterised in that**
the output tray (41) is disposed on the base of a housing (60), that on its upper side it displays an opening (62) corresponding to the dimensions of the copy, from said opening a guide runs to the output tray, which guide is designed such that the copy falling through the opening describes a path which rotates it by 180°.

21. Device according to one or more of claims 11 to 20,
**characterised in that**
the output tray (41) is disposed between the input tray (40) and the copy holder (42).

22. Device according to one of claims 10 to 20,
**characterised in that**
the copy holder (50) is disposed between the input tray and the output tray (6; 17).

23. Device according to claim 22,
**characterised in that**
a second means of transport (18, 19) is provided for transporting the copy from the copyholder to the output tray, which can be pivoted by an angle of about 150° anticlockwise or by about 210° clockwise in a plane vertical to the copy holder plane.

24. Device according to claim 23,
**characterised in that**
suction openings in the plate of the second means of transport can be connected with the suction device by means of slots disposed in the pivot guide, said slots opening during the pivoting process.

25. Device according to one of claims 10 to 24,
**characterised in that**
a link with the atmosphere can be created by closable openings above the suction openings in the means of transport.

## Revendications

1. Procédé d'introduction automatique de documents comme des microfiches, des pochettes de microfilms ou analogues, à afficher sur un appareil de visualisation et / ou à photocopier dans un appareil de numérisation (3), dans lequel un document est amené, respectivement, à partir d'un magasin de réception (6, 46) d'une pile de documents à traiter, à un support de documents (5, 42) et, de là, à un magasin de sortie (17, 41) des documents traités, le document le plus au-dessus étant aspiré d'une pile de documents, située dans le magasin de réception, le document aspiré étant transporté latéralement vers le support de documents et étant déposé sur celui-ci par suppression de l'effet d'aspiration et, après traitement du document, celui-ci étant à nouveau aspiré et étant transporté vers le magasin de sortie,
**caractérisé en ce**
**que** le document le plus au-dessus de la pile est aspiré vers le haut, approximativement au niveau du support de documents et que, ensuite, le reste de la pile est maintenu dans le magasin par aspiration dans le sens opposé.

2. Procédé selon la revendication 1,
**caractérisé en ce**
**que** le mouvement de transport, du magasin de réception au support de documents, ne commence que quand il a été constaté, au moyen d'un détecteur (73), qu'un document a été aspiré.

3. Procédé selon la revendication 1 ou 2,
**caractérisé en ce**
**que** le document , déposé sur le support de documents, est couvert au moyen d'une plaque en verre (68) .

4. Procédé selon l'une des revendications 1 à 3,
**caractérisé en ce**
**que** le document, transporté par l'intermédiaire du support de documents (42), est rejeté, après suppression de l'effet d'aspiration, à l'aide d'un ressort, sur le support de documents.

5. Procédé selon l'une des revendications 1 à 4,
**caractérisé en ce**
**que** le document est aspiré par un moyen de transport (43) hors du magasin de réception (40), déposé sur le support de document (42), à nouveau aspiré, après la numérisation, par le même moyen de transport et rejeté dans le magasin de sortie, sur le trajet du retour au magasin de réception (41).

6. Procédé selon l'une des revendications 1 à 4,
**caractérisé en ce**
**que** le document est aspiré hors du magasin de réception (6) par un moyen de transport (7), déposé sur le support de documents et à nouveau aspiré, après la numérisation, par un deuxième moyen de transport (18) et déposé par celui-ci dans le magasin de sortie (17).

7. Procédé selon la revendication 6,
**caractérisé en ce**
**que** le document est tourné, après la réception par le support de documents sur le trajet du magasin de sortie, d'environ 150° dans le sens contraire des aiguilles d'une montre ou d'environ 210° dans le sens des aiguilles d'une montre et glisse, après suppression de l'effet d'aspiration, en biais dans le magasin de sortie (17) .

8. Procédé selon l'une des revendications 1 à 6,
**caractérisé en ce**
**qu'**après la réception du document par le support de document (5, 42), le document est rejeté, en étant guidé, dans le magasin de sortie (17, 42), de telle sorte que le document y est tourné de 180°.

9. Procédé selon une ou plusieurs des revendications 1 à 8,
**caractérisé en ce**
**qu'**avant l'aspiration du document le plus au-dessus, l'ensemble de la pile de documents est soulevé par le bas par admission d'air comprimé et qu'après l'aspiration du document le plus au-dessus, il est réaspiré vers le fond du magasin (6, 40) par le passage du mode soufflage au mode aspiration.

10. Mécanisme d'introduction automatique de documents, comme des microfiches, des pochettes de microfilms ou analogues, à afficher sur un appareil de visualisation et / ou à photocopier dans un appareil de numérisation (3), avec un magasin de réception (6, 46) pour une pile de documents à traiter, un support de documents (5, 42) et un magasin de sortie (17, 41) pour les documents traités, des moyens (7, 8 ; 18) étant prévus pour le transport d'un document du magasin de réception vers le support de documents et pour le transport du document du support de documents vers le magasin de sortie, le moyen (7, 43) de transport d'un document du magasin de réception au support de documents se composant d'un plateau plat (8, 53), muni d'ouvertures d'aspiration (9, 54), les ouvertures d'aspiration étant reliées à un mécanisme d'aspiration (12 ; 56, 59) et pouvant être couvertes entièrement par le document aspiré,
**caractérisé en ce**
**que** le magasin de réception se compose d'un récipient, adapté à la taille des documents, avec une partie de fond à double paroi et des parties latérales à double paroi s'élevant à partir de celle-ci, de telle sorte que les parties de fond et latérales forment un espace intérieur creux commun, qui peut être mis en dépression au moyen d'un mécanisme d'aspiration, que les parois intérieures des parties latérales présentent des ouvertures et que des moyens sont prévus pour constituer des zones à fente (21), entre le plateau et les parties latérales.

11. Mécanisme selon la revendication 10,
**caractérisé en ce**
**que** le plateau plat, muni des ouvertures d'aspiration, fait partie d'un boîtier (49), mobile sur des coulisses, lequel est partagé en deux zones partielles (51, 52) au moyen d'une paroi intermédiaire (50), l'une (52) des zones partielles étant disposée au-dessus des ouvertures d'aspiration et pouvant être mis en dépression au moyen d'un ventilateur aspirant (56), disposé dans la deuxième (51) zone partielle, la deuxième zone partielle (51) présentant une ouverture (55), qui est alignée avec une ouverture (47) dans le magasin de réception, de telle sorte que l'air, aspiré hors de la première zone partielle (52), parvient dans la partie de fond à double paroi du magasin de réception.

12. Mécanisme selon la revendication 10 ou 11,
**caractérisé en ce**
**que**, dans la partie de fond à double paroi du magasin de réception, un ventilateur aspirant (59) est disposé, lequel fait saillie, du côté soufflage, hors de la paroi latérale du magasin de réception.

13. Mécanisme selon l'une des revendications 10 à 12,
**caractérisé en ce**
**qu'**est disposé, dans le plateau plat, muni d'ouvertures d'aspiration, un microcontact (73), dépassant vers le bas du plan du plateau.

14. Mécanisme selon l'une des revendications 10 à 12,
**caractérisé en ce**
**qu'**il est prévu, dans le magasin de réception, sur le parcours du flux d'air, du ventilateur aspirant, prévu dans le moyen de transport, un microcontact (74), pouvant être actionné par le flux d'air.

15. Mécanisme selon l'une des revendications 10 à 14,
**caractérisé en ce**
**que** le support de documents se compose d'un châssis, correspondant aux dimensions du document, sur lequel peut s'articuler une plaque en verre (68), couvrant le document .

16. Mécanisme selon la revendication 15,
**caractérisé en ce**
**que** la plaque en verre est fixée avec du jeu sur deux bras en porte-à-faux (67) en forme de U, qui peuvent pivoter, au moyen d'un moteur électrique (70), de la position de recouvrement à une position de libération.

17. Mécanisme selon la revendication 15 ou 16,
**caractérisé en ce**
**que** le châssis se compose de profilés creux, les parois intérieures des profilés présentant des. ouvertures, à leurs extrémités, tournées vers la base (64) et les espaces creux (65) pouvant être mis en dépression dans les profilés creux.

18. Mécanisme selon l'une des revendications 15 à 17,
**caractérisé en ce**
**que** la plaque en verre (68) est fixée aux bras en porte-à-faux (67) au moyen d'une bande adhésive double face.

19. Mécanisme selon l'une des revendications 15 à 18,
**caractérisé en ce**
**que** les bras en porte-à-faux (67) sont constitués articulés dans le secteur des points de fixation de la plaque en verre, de telle sorte qu'un jeu de quelques degrés est admis.

20. Mécanisme selon l'une des revendications 11 à 19,
**caractérisé en ce**
**que** le magasin de sortie (41) est disposé dans le fond d'un boîtier (60), qu'il présente, sur son côté supérieur, une ouverture (62), correspondant aux dimensions du document, d'où s'étend un guide vers le magasin de sortie, qui est configuré de sorte que le document, qui tombe par l'ouverture, décrit un parcours, qui le tourne de 180°.

21. Mécanisme selon une ou plusieurs des revendications 11 à 20,
**caractérisé en ce**
**que** le magasin de sortie (41) est disposé entre le magasin de réception (40) et le support de documents (42).

22. Mécanisme selon l'une des revendications 10 à 20,
**caractérisé en ce**
**que** le support de documents (50) est disposé entre le magasin de réception et le magasin de sortie (6 ; 17).

23. Mécanisme selon la revendication 22,
**caractérisé en ce**
**qu'**il est prévu, pour le transport du document du support de documents vers le magasin de sortie, un deuxième moyen de transport (18, 19), qui peut pivoter, en suivant un angle d'environ 150° dans le sens contraire des aiguilles d'une montre ou d'environ 210° dans le sens des aiguilles d'une montre, dans un plan vertical, par rapport au plan de support de document.

24. Mécanisme selon la revendication 23,
**caractérisé en ce**
**que** des ouvertures d'aspiration, dans le plateau du deuxième moyen de transport, peuvent être reliées par l'intermédiaire d'entailles, disposées dans le guide de pivotement, s'ouvrant lors du processus de pivotement, avec le mécanisme d'aspiration.

25. Mécanisme selon l'une des revendications 10, à 24,
**caractérisé en ce**
**qu'**une liaison avec l'atmosphère peut être établie par des ouvertures obturables, au-dessus des ouvertures d'aspiration, dans le(s) moyen(s) de transport.
